# EUROPEAN PATENT APPLICATION

(11) **EP 4 697 228 A1**
(43) Date of publication of application: **18.02.2026**
(21) Application number: 24763290.4
(22) Date of filing: 18.03.2024
(51) Int. Cl.: G06F 40/18

(54) **INFORMATION PROCESSING METHOD AND APPARATUS, TERMINAL, AND STORAGE MEDIUM**

(30) Priority: 30.03.2023 CN 202310330869
(71) Applicant: Beijing Zitiao Network Technology Co., Ltd., Beijing 100190 (CN)
(72) Inventor: LIN, Zhifeng, Beijing 100028 (CN)
(74) Representative: Marks & Clerk LLP
(86) International application number: PCT/CN2024/082307
(87) International publication number: WO 2024/179610

(57) **Abstract**

The present invention provides an information processing method, and apparatus, a terminal, and a storage medium. The information processing method comprises: in response to a first operation event creating a group field in a target table of a first document; in response to a second operational event, associating a target cell corresponding to the group field with at least one target group; in response to a third operation event based on the target cell, opening or joining the target group; wherein the group field is a field with a field type of group. The present disclosure enriches the types of fields and enables fast jumping of groups.

## Description

### CROSS-REFERENCE TO RELATED APPLICATION(S)

This application is based on a Chinese patent application with application number: 202310193326. X, filed on February 28, 2023, titled: Information Processing Method and Apparatus, Terminal and Storage Medium, and a Chinese patent application with application number: 202310330869.1, filed on March 30, 2023, and claims priority of the Chinese patent applications, the entire contents of which are hereby incorporated herein by reference.

### FIELD

The present disclosure relates to the technical field of computers, and particularly relates to an information processing method and apparatus, a terminal, and a storage medium.

### BACKGROUND

Documents, such as online documents, have tables configurable therein. By using a table, different contents can be entered into different fields of the table.

### SUMMARY

The disclosure provides an information processing method and apparatus, a terminal, and a storage medium.

The present disclosure adopts the following technical aspects.

In some embodiments, the present disclosure provides an information processing method comprising:
in response to the first operation event, creating a group field in a target table of a first document;
in response to a second operation event, associating a target cell corresponding to the group field with at least one target group;
in response to a third operation event based on the target cell, opening or joining the target group;
wherein the group field is a field with a field type of group.

In some embodiments, the present disclosure provides an information processing method, comprising:
in response to a target event in a target table of the first document, creating a target group in an instant messaging client or a mail client;
obtaining group data of the target group, associating a target cell of the target table with the target group according to the group data;
in response to a first operation event based on the target cell, opening or joining the target group;
wherein the field type of the target cell is a group field.

In some embodiments, the present disclosure provides an information processing apparatus comprising:
a creation unit configured to create a target group in an instant messaging client or a mail client in response to a target event in a target table of the first document;
a control unit configured to obtain group data of the target group, and associate a target cell of the target table with the target group according to the group data;
the control unit being further configured to opening or joining the target group in response to a first operation event based on the target cell;
wherein the field type of the target cell is a group field.

In some embodiments, the present disclosure provides an information processing apparatus, including:
a creating unit configured to create a group field in a target table of the first document;
a control unit configured to associate a target cell corresponding to the group field with at least one target group in response to a second operation event;
the control unit being further configured to open or join the target group in response to a third operation event based on the target cell;
wherein the group field is a field with a field type of group.

In some embodiments, the present disclosure provides a terminal comprising: at least one memory and at least one processor;
wherein the memory is configured to store program code, and the processor is configured to call the program code stored in the memory to execute the above-described method.

In some embodiments, the present disclosure provides a computer-readable storage medium for storing program code that, when executed by a computer, causes the computer to perform the method of any of the above.

An information processing method according to embodiments of the present disclosure, in response to a first operation event, a group field in a target table of a first document is created; in response to a second operation event, a target cell corresponding to the group field is associated with at least one target group; in response to a third operation event based on the target cell, the target group is opened or joined; wherein the group field is a field with a field type of group. The present disclosure enriches the types of fields and enables fast jumping of groups.

### BRIEF DESCRIPTION OF THE DRAWINGS

The above and other features, advantages, and aspects of embodiments of the present disclosure will become more apparent when taken in conjunction with the accompanying drawings and with reference to the following Detailed Description. Throughout the drawings, the same or similar reference numerals denote the same or similar elements. It should be understood that the drawings are schematic and that elements and elements are not necessarily drawn to scale.
FIG. 1 is a flowchart of an information processing method according to embodiments of the present disclosure.
FIGS. 2 to 4 are schematic diagrams of a first document according to embodiments of the present disclosure.
FIG. 5 is a schematic diagram of a target cell in different states according to embodiments of the present disclosure.
FIGS. 6 to 8 are schematic diagrams of a first document according to embodiments of the present disclosure.
FIG. 9 is a flowchart of a further information processing method according to embodiments of the present disclosure.
FIG. 10 is a schematic structural diagram of an electronic device according to embodiments of the present disclosure.

### DETAILED DESCRIPTION OF EMBODIMENTS

Embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein, but are provided for a more thorough and complete understanding of the present disclosure. It should be understood that the drawings and embodiments of the present disclosure are for illustrative purposes only, and are not intended to limit the scope of protection of the present disclosure.

It should be understood that the various steps described in the method embodiments of the present disclosure may be performed sequentially and/or in parallel. Furthermore, method embodiments may include additional steps and/or omit performing the illustrated steps. The scope of the present disclosure is not limited in this respect.

As used herein, the term "comprising" and variations thereof are open-encompassing, i.e., "including but not limited to". The term "based on" is "based at least in part on". The term "one embodiment" means "at least one embodiment"; The term "another embodiment" means "at least one additional embodiment"; The term "some embodiments" means "at least some embodiments". Relevant definitions of other terms will be given in the following description.

It should be noted that the concepts such as "first" and "second" mentioned in the present disclosure are only used to distinguish different devices, modules, or units, and are not used to limit the order or interdependence of functions performed by these devices, modules, or units.

It should be noted that modifications of "a" mentioned in the present disclosure are illustrative and not limiting, and should be understood by those skilled in the art to mean "one or more" unless the context clearly dictates otherwise.

The names of messages or information interacted between multiple devices in embodiments of the present disclosure are for illustrative purposes only, and are not intended to limit the scope of these messages or information.

Hereinafter, solutions provided by embodiments of the present application will be described in detail with reference to the accompanying drawings.

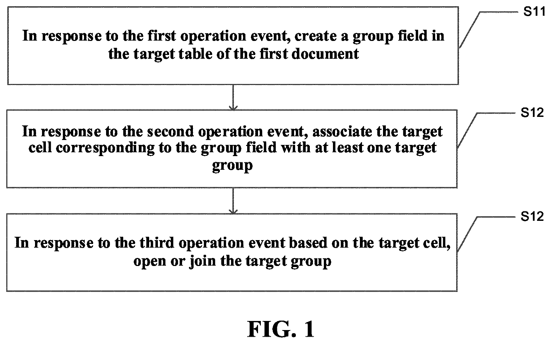

As shown in FIG. 1, FIG. 1 is a flowchart of an information processing method according to embodiments of the present disclosure, and includes the following steps.

S11: In response to the first operation event, a group field in the target table of the first document is created.

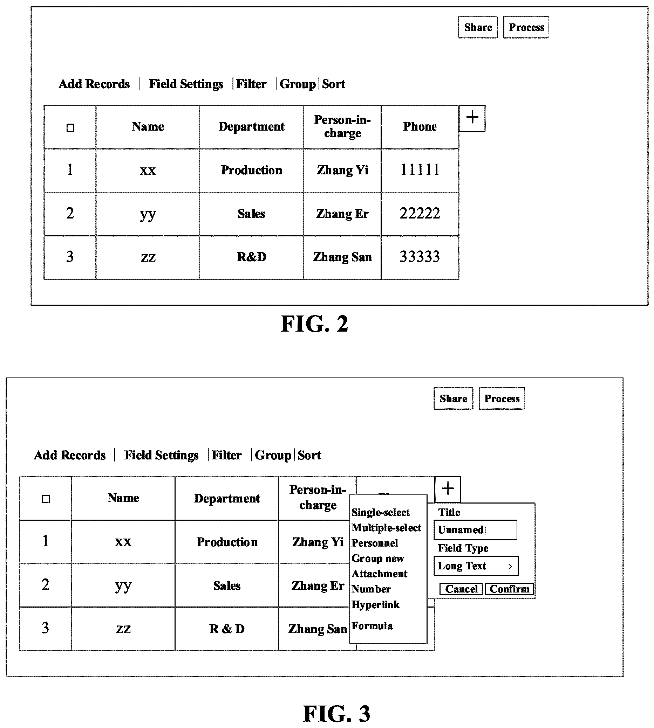

In some embodiments, the method proposed by the present disclosure may be used for a terminal or a server, the first operation event may include one or more operations, the first document may be an online document, and the first document is accessed by accessing a web page. The first document may also be an offline document. The first document may be a tabular document or a non-tabular document having a table. The group field can be created in the target table as shown in FIGS. 2 and 3. The field is created for a column of data in the table. After the field is created, all cells in the column are configured as the field, and the content filled in the cell matches the field, such as the name, department, person in charge, etc. in Figure 2. You can create a new field by clicking on the box with a plus sign inside the upper right corner of the table in Figure 2 (see Figure 3). A group field is a field whose field type is group. In some embodiments, a field type may be used to limit the type of content that can be entered in a field, for example, a group field may be a field for entering a group. In some embodiments, a field is an attribute of a cell, and a group field may be a column of cells whose field type is a group.

S12: In response to the second operation event, the target cell corresponding to the group field is associated with at least one target group.

In some embodiments, the second operation event may include one or more operations, and the target cell may be associated with the target group by entering or selecting the group in the group field, and the association relationship between the two is established. Target cells can be associated with one group or multiple groups. The target cell may be one cell in a column of cells whose attribute is a group field, or may be multiple cells in a column of cells whose attribute is a group field. The target group may be an ordinary group or a topic group capable of transmitting a topic.

S13: In response to a third operation event based on the target cell, a target group is opened or joined.

In some embodiments, the third operation event may include one or more operations, and the third operation event is an operation based on the target cell, for example, may be an operation of clicking the target cell to open or join a target group associated with the target cell.

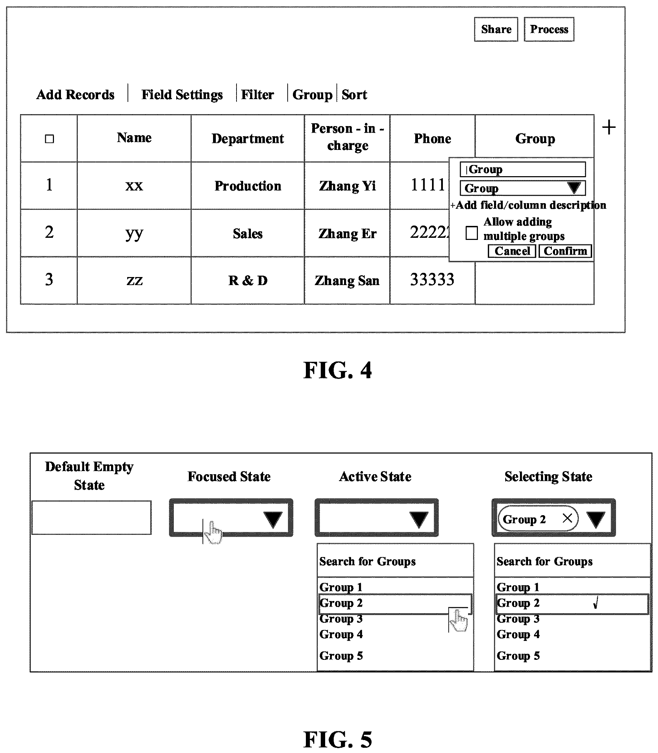

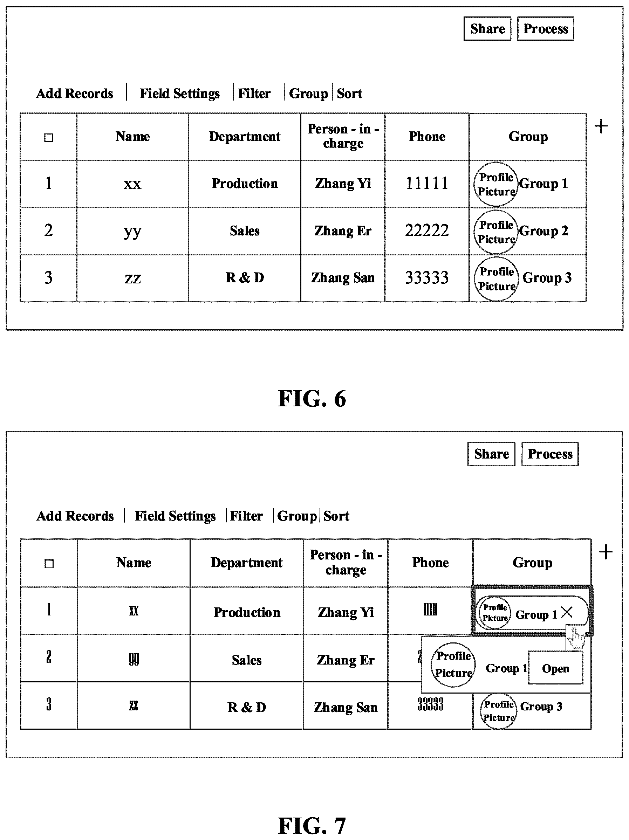

In some embodiments, as described in FIG. 2 to FIG. 5, the interface for adding fields is called by clicking the plus sign in the upper right corner of FIG. 2. As shown in FIG. 3, the title and field type options are displayed in the interface. The title is the name of the column in which the field is located, and characters and patterns are supported. The field type may be selected, and the option list may be displayed after the input box of the field is triggered as shown in FIG. 3. A setting operation can be performed on the group field, such as calling out the field setting interface, which can be automatically popped up after the group field is created (across the telephone column and the group column with the Confirm and Cancel button interfaces), in which the first row of controls in FIG. 4 is used to set the title ("group" in FIG. 4), The control in the second row where the inverted triangle is located in the field setting interface in Figure 4 is used to set the field type ("group" in Figure 4), and the display control is used to determine whether the group field allows to add multiple groups, thereby setting whether the group field can be associated with multiple groups. For the cell in the group field (taking the target cell as an example), when it is not associated with a group, its display style can be as shown in the default empty state in FIG. 5. After the target cell is selected by the control marker, it is displayed in the focused state, and at this time, the control for selecting the group can be displayed. After being triggered, the selectable group and the search control (activated state) are displayed, and the group is selected as the target group (selected state) for association. As shown in Figure 6, after the target cell is associated with the target group, the associated target group is displayed in the target cell (the cell where group 2 is located in the group column in Figure 6 is the target cell), and the target group is opened or joined by triggering, for example, by clicking on the target group in the target cell.

In some embodiments of the present disclosure, a group field having a type of group is added to the target table of the first document, and the target cell associated with the group field can be associated with the target group, so that the target group can be quickly opened or entered through the group field, thus enriching the type of the field and realizing the quick jump of the group. Users can determine the group to which records are associated by adding group fields to records in the table, and quickly join or enter the group.

In some embodiments of the present disclosure, after the target cell corresponding to the group field is associated with at least one target group, the step further includes: displaying identification information corresponding to each of the associated target groups in the target cell.

In some embodiments, identification information of the associated target group is displayed in the target cell as shown in FIG. 6. The identification information corresponding to the target group may include identification information such as one or more of a group profile picture, a group name, and a group thumbnail, so that the user can understand which group or groups the target cell is associated with. The group thumbnail can be displayed when the current user has the permission to view the group thumbnail, and is not displayed if the current user does not have the permission, and a screenshot of the group chat interface can be displayed in the group thumbnail, because it is likely that the names of some groups are similar, and the group thumbnail can better facilitate the user to determine the target group and avoid the user selecting the wrong group due to the similar names.

In some embodiments of the present disclosure, opening or joining the target group in response to a third operation event based on the target cell, comprises: in response to the third operation event performed based on the identification information in the target cell, opening or joining the target group corresponding to the identification information on which the third operation event is based.

In some embodiments, the third operation event may be, for example, trigger identification information. The target cell may be associated with one or more target groups, and thus the identification information may also be one or more, but the user may only want to access some of the target groups. Therefore, the identification information is triggered by clicking or the like, so that only the target group corresponding to the triggered identification information is opened or joined, and the function of selectively entering some of the target groups is realized.

In some embodiments of the present disclosure, if the information of the target group is updated or the target group is dissolved, the identification information corresponding to the target group in the target cell is updated in real time or regularly updated. Or, when the information of the target group is updated or the target group is dissolved, the identification information corresponding to the target group in the target cell is updated when the target group is associated with the target cell again, or when the target group is associated with another cell.

In some embodiments, information such as the name and profile picture of the target group may be updated, and at this time, the identification information in the target cell also needs to be updated. In some embodiments, it can be automatically updated in real time or regularly updated. In other embodiments, the first document does not usually obtain the information of the group, but only obtains the information of the group when the cell needs to be associated with the group. Therefore, the identification information of each group can be updated when the target group is associated with the cell, which can reduce the number of communication times and the amount of data between the first document and the group.

In some embodiments of the present disclosure, when the fourth operation event is performed on the identification information, a group profile of the target group corresponding to the identification information is displayed, and the group profile includes at least one of the following: a group name, a group profile picture, a group tag, and a control for opening or joining the target group.

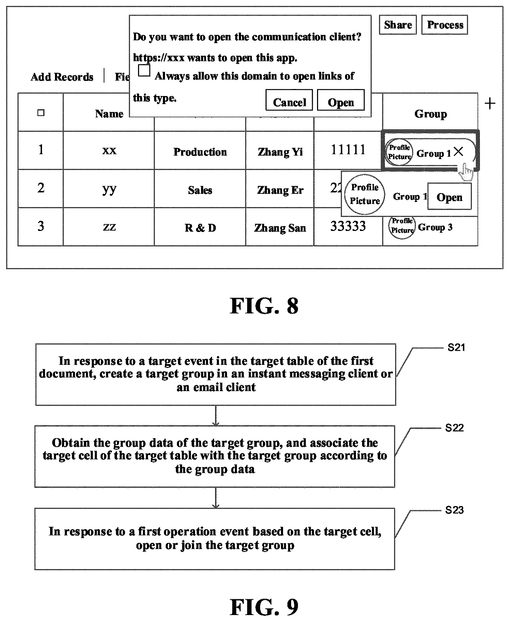

In some embodiments, for example, the fourth operation event may be to control the identifier to hover on the identifier information. At this time, as shown in FIG. 7, the group profile of the target group is displayed, and the group profile picture, the group name, and a control ("open" in FIG. 7) are displayed in the group profile, and the target group is opened or joined by triggering the control. In some embodiments, the third operation event may include, for example, performing a fourth operation event on the identification information and performing a trigger operation on the control in the group profile. That is, the target group can be opened or joined through the group profile. In some embodiments, as shown in FIG. 8, after the control on the group profile is triggered, a pop-up window is displayed for secondary confirmation, and after confirmation, the target group is opened or joined.

In some embodiments of the present disclosure, opening or joining the target group in response to a third operation event based on the target cell, comprises: opening or joining the target group in response to a third operation event based on the target cell, based on an attribution relationship between a current user performing the third operation event and the target group.

In some embodiments, when opening or joining a target group, the attribution relationship between the current user and the target group is determined first, and whether the current user has joined the target group is determined, and then the target group is opened or joined. In some embodiments, the application in which the first document and the target group are located are different applications and are associated with each other, the target group is located in the communication client, and the target group is opened or entered by opening the communication client.

In some embodiments of the present disclosure, opening or joining the target group based on the attribution relationship between the current user performing the third operation event and the target group, comprises: opening the target group if the current user has joined the target group; or, if the current user has not yet joined the target group, joining the target group.

In some embodiments, if the current user is already in the target group, it indicates that the current user has permission to access the target group and therefore opens the target group, and if the current user is not in the target group, it indicates that the current user does not have permission to directly open the target group and therefore joins the target group, for example, an interface for applying to join the target group may be displayed to fill in a joining application.

In some embodiments of the present disclosure, if the current user has joined the target group and the target group has been dissolved, after performing the third operation event, the target group is not to be joined or opened, and first prompt information is displayed, and the first prompt information is used to prompt that the current user is not in the target group.

In some embodiments, since the target group has been dissolved, the user cannot join or enter the target group, and therefore, after the third operation event is executed, the first prompt information is displayed to prompt that the user is no longer in the target group.

In some embodiments of the present disclosure, if the current user has not yet joined the target group, and the current user does not have the permission to join the target group, after executing the third operation event, the target group is not joined or opened, and second prompt information is displayed, and the second prompt information is used to prompt failure or error when joining the target group.

In some embodiments, a certain permission may be required to join the target group, and if the current user does not have the permission, the user cannot join the target group. At this time, after executing the third operation event, the user cannot join or enter the target group, and instead, the second prompt information is displayed to prompt that joining the target group failed or made an error.

In some embodiments of the present disclosure, if the current user has not joined the target group, and the target group has been dissolved, invalidated, or the permission required to join the target group has changed, after performing the third operation event, the target group is not joined or opened, and third prompt information is displayed, and the third prompt information is used to prompt the current user that the target group cannot join the target group.

In some embodiments, the current user has not yet joined the target group, but the target group has been dissolved or invalidated, and no longer exists, and cannot join the target group at this time, or the permission required by the target group is changed and the current user does not have the permission to join the target group at this time, the target user cannot join the target group at this time, so the third prompt information is displayed to inform the current user of the inability to join.

In some embodiments of the present disclosure, associating a target cell corresponding to the group field with at least one target group in response to a second operation event, comprises: in response to a first operation on the target cell, displaying a selectable group; in response to a second operation on a selectable group, selecting at least one group from the selectable group; establishing an association relationship between the target cell and the selected group; wherein the selected group that has established the association relationship with the target cell is the target group.

In some embodiments, as shown in FIG. 5, when the target cell is not associated with a group, the target cell is displayed as a default empty state, and the target cell selected by the control marker becomes a focused state. At this time, the selectable group and the search control are displayed by clicking a drop-down option, and at this time, the selectable group and the search control are in an active state. After the selectable group is selected, the selected selectable group is associated with the target cell as the target group.

In some embodiments of the present disclosure, the selectable group is a group for which the current user executing the second operation event has a preset permission. In some embodiments, the selectable group displayed may be a group visible to the current user. If some groups have permission restrictions set so that the group is not visible to the current user, the group is not displayed in the selectable group.

In some embodiments of the present disclosure, a search control for searching for a group is displayed while the selectable group is displayed. In this way, the user can find the group through the search control. In some embodiments, the search control can only find the group for which the current user has preset permissions, for example, the group visible to the current user.

In some embodiments of the present disclosure, after selecting at least one group from the selectable groups, identification information corresponding to the target group is displayed in the target cell, and if a third operation is performed on the identification information, the identification information is deleted and the group corresponding to the deleted identification information is canceled. In some embodiments, as shown in the selection state of FIG. 5, after selecting a group (group 2 in FIG. 5) for the target cell, identification information is displayed, and the current user can cancel the selection of the group by deleting the identification information.

In some embodiments of the present disclosure, the target cell can be referenced by referencing the target cell to point to a target group to which the target cell is associated. In some embodiments, the target cell of the group field can be referenced in an address manner in, for example, trigger conditions, judgment conditions, and execution operations. For example, when sending a communication message, if the target group associated with the target cell is to send the communication message, the receiver can be set as the target cell, and the target cell can be referenced to the group pointed to by the group field, so that it is not necessary to define a specific group, and dynamic reference can be realized.

In some embodiments of the present disclosure, in response to a first operation event, creating a group field in a target table of a first document, comprises: in response to a fourth operation on a first control, displaying a field creation interface; in response to a second operation in the field creation interface, determining that the field type of the created field is a group and creating the group field.

In some embodiments, as shown in FIG. 2, by clicking the plus sign (first control) in the upper right corner of FIG. 2, an interface for adding a field (field creation interface) is called. As shown in FIG. 3, the title and field type options are displayed in the interface, the title is the name of the column in which the field is located, and the field type may have an option list as shown in FIG. 3. The group type is selected among them, and then CONFIRM is clicked to create a group field that is not associated with the group.

In some embodiments of the present disclosure, creating a group field in a target table of a first document in response to a first operation event, comprises: configuring an attribute of a column of cells in the target table of the first document as a group field in response to the first operation event, or adding a column of cells in the target table of the first document having an attribute configured as a group field in response to the first operation event.

In some embodiments, a field is an attribute of a cell, and creating a group field is to create a column of cells having a group field attribute, or a change attribute of a cell whose attribute is not a group field is to a column of cells of a group field. The target cell can be one or more cells in a column of cells whose attribute is a group field.

In some embodiments of the present disclosure, the target group is a group of communication clients associated with an account of the current user. In some embodiments, the communication client may be a client bound to the first document, for example, the first document may be an online document in a server of the communication client, the account of the current user is associated with the communication client, the group is a group among the communication clients, the communication client is determined by the account of the current user, and the target group is found from the communication client. For example, the communication client may be an instant messaging software or application, and the group may be a chat group therein; or, the communication client may be a conference software or an application program, and the group may be a conference member group corresponding to a conference event therein; or, the communication client may be a collaboration document software or application, and the group may be a group of members in a collaboration space.

In some embodiments of the present disclosure, the target group is a mail group in a mail client associated with an account of the current user. In some embodiments, the mail group may be a communication group comprising at least one mail contact. The mail client may be a client bound to the first document, and both of them may be located under two subroutines of the same collaborative office platform, the current account is associated with the mail client, the mail client is determined by the current account, and then the target group can be found in the mail client.

In some embodiments of the present disclosure, an information processing method is proposed, and the description in any of the above embodiments of the present disclosure can be used in the following embodiments without conflict, as shown in FIG. 9, including:
S21: In response to the target event in the target table of the first document, a target group is created in the instant messaging client or the mail client.
   In some embodiments, the target event may be an event that occurs in the target table, which may be an event that occurs automatically or may be an event that is manually triggered by the user. The target event may include, for example, at least one of adding new content to the target table, changing the table content of the target table, matching the content of at least one cell in the target table with a preset value, and satisfying a preset time node. When the target event is generated in the target table, the target group can be automatically created, and the instant messaging client or the mail client can be associated with the current user's account or pre-associated with the first document. The target group includes users in an instant messaging client or a mail client.
S22: Group data of the target group is obtained and the target cell of the target table is associated with the target group based on the group data.

In some embodiments, the group data of the target group may include, for example, one or more of a group name, a group profile picture, a group member, and a group description. The target cell in the target table can be one or more cells, and the field type of the target cell is a group field. The target cell may be a cell of any group of fields in the target table; or, the target cell may be a cell of a group field in a record row corresponding to the target event; a group field is a field with a field type of group.

S23: In response to a first operation event based on the target cell, a target group is opened or joined.

In some embodiments, the first operation event may include one or more operations, such as triggering a target cell by clicking or the like, thereby opening or joining a target group.

In some embodiments of the present disclosure, after the target event is generated in the target table, the target group can be automatically created, and the target group can be associated with the target cell of the group field, so that the target group can be quickly opened or entered through the target cell of the group field, thus enriching the type of the field and realizing quick joining or jumping of the group.

In some embodiments of the present disclosure, after the target cell of the target table is associated with the target group, the step further comprises: displaying identification information corresponding to the associated target group in the target cell.

In some embodiments, the identification information corresponding to the target group may include identification information such as one or more of: a group profile picture, a group name, and a group thumbnail, so that the user can understand which group or groups the target cell is associated with. The group thumbnail can be displayed when the current user has the permission to view the group thumbnail, and is not displayed if the current user does not have the permission, and a screenshot of the group chat interface can be displayed in the group thumbnail, because it is likely that the names of some groups are similar, and the group thumbnail can better facilitate the user to determine the target group and avoid the user selecting the wrong group due to the similar names.

In some embodiments of the present disclosure, opening or joining the target group in response to the first operation event based on the target cell, comprises: in response to the first operation event performed based on the identification information in the target cell, opening or joining the target group corresponding to the identification information on which the first operation event is based.

In some embodiments, the first operation event may be, for example, trigger identification information. The target cell may be associated with one or more target groups, and thus the identification information may also be one or more, but the user may only want to access some of the target groups. Therefore, the identification information is triggered by clicking or the like, so that only the target group corresponding to the triggered identification information is opened or joined, and the function of selectively entering some of the target groups is realized.

In some embodiments, if the information of the target group is updated or the target group is dissolved, the identification information corresponding to the target group in the target cell is updated in real time or regularly updated. In some embodiments, when the information of the target group is updated or the target group is dissolved, the identification information corresponding to the target group in the target cell is updated when the target group is associated with the target cell again, or when the target group is associated with another cell.

In some embodiments, information such as the name and profile picture of the target group may be updated, and at this time, the identification information in the target cell also needs to be updated. In some embodiments, it can be automatically updated in real time or regularly updated. In other embodiments, the first document does not usually obtain the information of the group, but only obtains the information of the group when the cell needs to be associated with the group. Therefore, the identification information of each group can be updated when the target group is associated with the cell, which can reduce the number of communication times and the amount of data between the first document and the group.

In some embodiments, when the second operation event is performed on the identification information, a group profile of the target group corresponding to the identification information is displayed, and the group profile includes at least one of the following: a group name, a group profile picture, a group tag, and a control for opening or joining the target group.

In some embodiments, the second operation event may be, for example, to control the identification to hover on the identification information, and to view the group profile through the identification information, so that the target group can be opened or joined.

In some embodiments of the present disclosure, opening or joining the target group in response to a first operation event based on the target cell, comprises: opening or joining the target group in response to a first operation event based on the target cell, based on an attribution relationship between a current user performing the first operation event and the target group.

In some embodiments, when opening or joining a target group, the attribution relationship between the current user and the target group is determined first, and whether the current user has joined the target group is determined, and then the target group is opened or joined. In some embodiments, the application in which the first document and the target group are located are different applications and are associated with each other, the target group may be located in the instant messaging client, and the target group may be opened or entered by opening the instant messaging client.

In some embodiments of the present disclosure, if the current user has joined the target group, the target group will be opened; or, if the current user has not yet joined the target group, the target group will be joined.

In some embodiments of the present disclosure, if the current user has joined the target group and the target group has been dissolved, after executing the first operation event, the target group will not be joined or opened, and first prompt information is displayed, and the first prompt information is used to prompt that the current user is not in the target group.

In some embodiments, since the target group has been dissolved, the user cannot join or enter the target group, and therefore, after the first operation event is executed, the first prompt information is displayed to prompt that the user is no longer in the target group.

In some embodiments of the present disclosure, if the current user has not yet joined the target group, and the current user does not have the permission to join the target group, after executing the first operation event, the target group is not joined or opened, and second prompt information is displayed, and the second prompt information is used to prompt failure or error when joining the target group.

In some embodiments, a certain permission may be required to join the target group, and if the current user does not have the permission, the user cannot join the target group. At this time, after executing the first operation event, the user cannot join or enter the target group, and instead, the second prompt information is displayed to prompt that joining the target group failed or made an error.

In some embodiments of the present disclosure, if the current user has not joined the target group, and the target group has been dissolved, invalidated, or the permission required to join the target group has changed, after executing the first operation event, the target group will not be joined or opened, and third prompt information is displayed, and the third prompt information is used to prompt that the current user cannot join the target group.

In some embodiments, the current user has not yet joined the target group, but the target group has been dissolved or invalidated, and no longer exists, and cannot join the target group at this time, or the permission required by the target group is changed and the current user does not have the permission to join the target group at this time, the target user cannot join the target group at this time, so the third prompt information is displayed to inform the current user of the inability to join.

In some embodiments of the present disclosure, the target cell can be referenced by referencing the target cell to point to a target group to which the target cell is associated. In some embodiments, the target cell of the group field may be referenced in an address manner in, for example, a trigger condition, a determining condition, and an execution operation. For example, when sending a communication message, if the target group associated with the target cell is to send the communication message, the receiver may be set as the target cell, and the target group may be referenced by referencing the target cell, so that it is not necessary to limit a specific group, and dynamic reference may be realized.

In some embodiments of the present disclosure, the target group is a group of instant messaging clients associated with an account of a current user; alternatively, the target group is a mail group in a mail client associated with an account of the current user.

In some embodiments, the instant messaging client may be a client bound to the first document, for example, the first document may be an online document in the server of the instant messaging client, the account of the current user is associated with the instant messaging client, the group is even a group in the communication client, the instant messaging client is determined by the account of the current user, and the target group is created.

In some embodiments, the mail group may be a communication group comprising at least one mail contact. The mail client may be a client bound to the first document, and both of them may be located under two subroutines of the same collaborative office platform, and the current account is associated with the mail client, and the mail client is determined by the current account, so as to create a target group.

Some embodiments of the present disclosure also provide an information processing apparatus, comprising:
a creating unit configured to create a group field in a target table of the first document in response to the first operation event;
a control unit configured to associate a target cell corresponding to the group field with at least one target group in response to a second operation event;
the control unit being further configured to open or join the target group in response to a third operation event based on the target cell;
wherein the group field is a field with a field type of group.

In some embodiments, the control unit is further configured to: after associating the target cell corresponding to the group field with at least one target group, display identification information corresponding to each of the associated target groups in the target cell.

In some embodiments, the identification information corresponding to the target group includes a group profile picture, a group name, and/or a group thumbnail.

In some embodiments, in response to a third operation event based on the target cell, opening or joining the target group comprises:
in response to the third operation event performed based on the identification information in the target cell, opening or joining a target group corresponding to the identification information on which the third operation event is based.

In some embodiments, the control unit is further configured to at least one of:
if the information of the target group is updated or the target group is dissolved, update the identification information corresponding to the target group in the target cell in real time or regularly;
if the information of the target group is updated or the target group is dissolved, update identification information corresponding to the target group in the target cell when the target group is associated with the target cell again, or when the target group is associated with another cell;
if the fourth operation event is performed on the identification information, a group profile of the target group corresponding to the identification information is displayed, and the group profile includes at least one of the following: a group name, a group profile picture, a group tag, and a control for opening or joining the target group.

In some embodiments, in response to a third operation event based on the target cell, opening or joining the target group comprises:
in response to a third operation event based on the target cell, opening or joining the target group based on an attribution relationship of a current user performing the third operation event to the target group.

In some embodiments, opening or joining the target group based on an attribution relationship between a current user performing the third operation event and the target group comprises:
if the current user has joined the target group, opening the target group; or,
if the current user has not yet joined the target group, joining the target group.

In some embodiments, the control unit is further configured to: if the current user has joined the target group and the target group has been dissolved, after executing a third operation event, do not join and do not open the target group, and display first prompt information for prompting that the current user is not in the target group;
In some embodiments, the control unit is further configured to: if the current user has not yet joined the target group, and the current user does not have the permission to join the target group, after executing the third operation event, not join and not open the target group, and display second prompt information, and the second prompt information being used to prompt failure or error when joining the target group.

In some embodiments, the control unit is further configured to: if the current user has not yet joined the target group, and the target group has been dissolved, invalidated, or the permission required for joining the target group has changed, after executing the third operation event, not join and not open the target group, and display third prompt information for prompting that the current user cannot join the target group.

In some embodiments, in response to a second operation event, associating a target cell corresponding to the group field with at least one target group comprises:
displaying a selectable group in response to a first operation on the target cell;
in response to a second operation on a selectable group, selecting at least one group from the selectable group;
establishing an association relationship between the target cell and the selected group;
wherein the selected group that has established an association relationship with the target cell is the target group.

In some embodiments, the selectable group is a group for which a current user executing the second operation event has a preset permission.

In some embodiments, a search control for searching for a group is displayed while the selectable group is displayed.

In some embodiments, after selecting at least one group from the selectable groups, identification information corresponding to the target group is displayed in the target cell, and if a third operation is performed on the identification information, the identification information is deleted and the group corresponding to the deleted identification information is deselected.

In some embodiments, the target cell can be referenced by referencing the target cell to point to a target group to which the target cell is associated.

In some embodiments, in response to the first operation event, creating a group field in a target table of the first document comprises:
displaying a field creation interface in response to a fourth operation on the first control;
in response to a second operation in the field creation interface, determining that the field type of the created field is a group and creating the group field.
in some embodiments, creating a group field in a target table of a first document in response to a first operation event comprises configuring an attribute of a column of cells in the target table in the first document as a group field in response to the first operation event, or,
in response to a first operation event, adding a column of cells having attributes configured as group fields to a target table in the first document.

In some embodiments, the target group is a group of communication clients associated with an account of the current user; or,
the target group is a mail group in a mail client associated with an account of the current user.

In some embodiments of the present disclosure, an information processing apparatus is provided, comprising:
a creation unit configured to create a target group in an instant messaging client or a mail client in response to a target event in a target table of the first document;
a control unit configured to obtain group data of the target group, and associate a target cell of the target table with the target group according to the group data;
the control unit being further configured to open or join the target group in response to a first operation event based on the target cell;
wherein the field type of the target cell is a group field.

In some embodiments, the target event includes at least one of: new content being added to the target table, table content of the target table being changed, content of at least one cell in the target table conforming to a preset value, and a preset time node being satisfied.

In some embodiments, the group data includes at least one of a group name, a group profile picture, group members, and a group description.

In some embodiments, the target cell is a cell of any group of fields in the target table; or, the target cell is a cell of a group field in a record row corresponding to the target event; the group field is a field with a field type of group.

In some embodiments, the control unit is further configured to display identification information corresponding to the associated target group in the target cell.

In some embodiments, the control unit is further configured to at least one of:
if the information of the target group is updated or the target group is dissolved, update the identification information corresponding to the target group in the target cell in real time or regularly;
if the information of the target group is updated or the target group is dissolved, update identification information corresponding to the target group in the target cell when the target group is associated with the target cell again, or when the target group is associated with another cell;
if the second operation event is performed on the identification information, display a group profile of the target group corresponding to the identification information, the group profile including at least one of a group name, a group profile picture, a group tag, and a control for opening or joining the target group.

In some embodiments, in response to a first operation event based on the target cell, opening or joining the target group comprises:
in response to a first operation event based on the target cell, opening or joining the target group based on an attribution relationship of a current user performing the first operation event to the target group.

In some embodiments, the target cell is capable of being referenced by referencing the target cell to point to a target group to which the target cell is associated.

In some embodiments, the target group is a group of instant messaging clients associated with an account of the current user; or,
the target group is a mail group in a mail client associated with an account of the current user.

As for the embodiment of the apparatus, since it basically corresponds to the embodiment of the method, it is sufficient to refer to the partial description of the embodiment of the method for related information. The device embodiments described above are merely schematic, wherein the modules described as separate modules may or may not be separate. Some or all of the modules may be selected according to actual needs to achieve the purpose of the solution of this embodiment. It can be understood and implemented by those skilled in the art without creative effort.

The method and the apparatus of the present disclosure have been described above based on embodiments and application examples. Further, the present disclosure also provides a terminal and a storage medium, and these terminals and storage media will be described below.

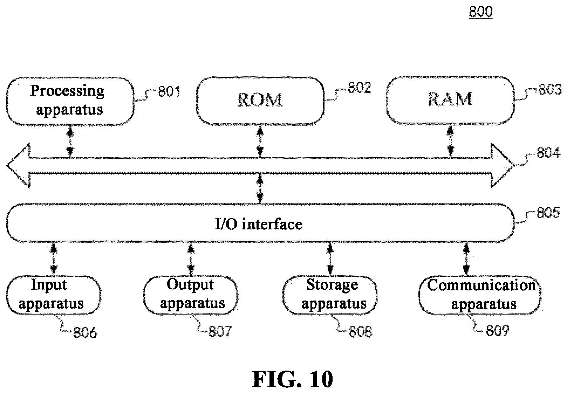

Next, reference is made to FIG. 10, which shows a schematic structural diagram of an electronic device (such as a terminal device or a server) 800 suitable for implementing embodiments of the present disclosure. The terminal device in the embodiment of the present disclosure may include, but is not limited to, a mobile terminal such as a mobile phone, a notebook computer, a digital broadcast receiver, a PDA (Personal Digital Assistant), a PAD (Tablet Computer), a PMP (Portable Multimedia Player), an in-vehicle terminal (for example, an in-vehicle navigation terminal), and the like, and a fixed terminal such as a digital TV, a desktop computer, and the like. The electronic device illustrated in the drawings is merely an example, and should not impose any limitation on the functions and scope of use of the embodiments of the present disclosure.

As shown in FIG. 10, the electronic device 800 may include a processing device (such as a central processing unit, a graphics processor, or the like) 801 that may perform various appropriate actions and processes according to a program stored in a read-only memory (ROM) 802 or a program loaded from a storage device 808 into a random access memory (RAM) 803. In the RAM 803, various programs and data necessary for the operation of the electronic device 800 are also stored. The processing device 801, the ROM 802, and the RAM 803 are connected to each other by a bus 804. An input/output (I/O) interface 805 is also connected to the bus 804.

Generally, the following devices may be connected to the I/O interface 805: an input device 806 including, for example, a touch screen, a touch pad, a keyboard, a mouse, a camera, a microphone, an accelerometer, a gyroscope, and the like; An output device 807 including, for example, a liquid crystal display (LCD), a speaker, a vibrator, or the like; A storage device 808 including, for example, a magnetic tape, a hard disk, or the like; And a communication device 809. The communication device 809 may allow the electronic device 800 to communicate wirelessly or wired with other devices to exchange data. Although the electronic device 800 is shown with various devices, it should be understood that it is not required that all of the devices shown be implemented or provided. More or fewer devices may alternatively be implemented or provided.

In particular, according to embodiments of the present disclosure, the processes described above with reference to the flowcharts may be implemented as computer software programs. For example, embodiments of the present disclosure include a computer program product comprising a computer program carried on a computer readable medium, the computer program including program code for performing the method illustrated in the flowchart. In such embodiments, the computer program may be downloaded and installed from the network via the communication device 809, or installed from the storage device 808, or installed from the ROM 802. When the computer program is executed by the processing apparatus 801, the above-described functions defined in the method of the embodiment of the present disclosure are performed.

The computer-readable medium of the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or a combination of any of the above. More specific examples of computer-readable storage media may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in conjunction with an instruction execution system, apparatus, or device. Whereas in the present disclosure, a computer-readable signal medium may include a data signal propagated in a baseband or as part of a carrier wave, carrying computer-readable program code therein. Such propagated data signals may take a variety of forms, including, but not limited to, electromagnetic signals, optical signals, or any suitable combination of the foregoing. The computer-readable signal medium may also be any computer-readable medium other than a computer-readable storage medium that may transmit, propagate, or transmit a program for use by or in connection with an instruction execution system, apparatus, or device. The program code contained on the computer-readable medium may be transmitted using any suitable medium, including, but not limited to, wires, optical cables, RF (radio frequency), or the like, or any suitable combination of the foregoing.

In some embodiments, the client, server may communicate using any currently known or future developed network protocol such as HTTP (Hypertext Transfer Protocol), and may be interconnected with any form or medium of digital data communication (e.g., a communication network). Examples of communication networks include local area networks ("LAN"), wide area networks ("WAN"), the Internet (e.g., the Internet), and end-to-end networks (e.g., ad hoc end-to-end networks), as well as any currently known or future-developed networks.

The computer-readable medium may be included in the electronic device; It may also exist alone without being assembled into the electronic device.

The computer-readable medium carries one or more programs that, when executed by the electronic device, cause the electronic device to perform the method of the present disclosure described above.

Computer program code for performing the operations of the present disclosure may be written in one or more programming languages, or combinations thereof, including object-oriented programming languages such as Java, Smalltalk, C + +, as well as conventional procedural programming languages such as the "C" language or similar programming languages. The program code may be executed entirely on the user's computer, partially on the user's computer, as a standalone software package, partially on the user's computer and partially on a remote computer, or entirely on a remote computer or server. In cases involving a remote computer, the remote computer may be connected to the user computer through any kind of network, including a local area network (LAN) or a wide area network (WAN), or may be connected to an external computer (e.g., using an Internet service provider to connect over the Internet).

The flowcharts and block diagrams in the drawings illustrate the architecture, functionality, and operation of possible implementations of systems, methods, and computer program products in accordance with various embodiments of the present disclosure. In this regard, each block in the flowchart or block diagram may represent a module, program segment, or portion of code that contains one or more executable instructions for implementing a specified logical function. It should also be noted that, in some alternative implementations, the functions noted in the blocks may also occur in a different order than that noted in the figures. For example, two blocks represented in succession may actually be executed substantially in parallel, and they may sometimes be executed in reverse order, depending on the function involved. It is also noted that each block in the block diagrams and/or flowchart diagrams, and combinations of blocks in the block diagrams and/or flowchart diagrams, may be implemented with a dedicated hardware-based system that performs the specified functions or operations, or may be implemented with a combination of dedicated hardware and computer instructions.

The units described in the embodiments of the present disclosure may be implemented by software or hardware. Among them, the name of the unit does not constitute a limitation of the unit itself in some cases.

The functions described above herein may be performed, at least in part, by one or more hardware logic components. For example, and without limitation, exemplary types of hardware logic components that may be used include: a field programmable gate array (FPGA), an application specific integrated circuit (ASIC), an application specific standard product (ASSP), a system-on-chip (SOC), a complex programmable logic device (CPLD), and the like.

In the context of the present disclosure, a machine-readable medium may be a tangible medium that may contain or store a program for use by or in conjunction with an instruction execution system, apparatus, or apparatus. The machine readable medium may be a machine readable signal medium or a machine readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include one or more line-based electrical connections, portable computer disks, hard disks, random access memory (RAM), read-only memory (ROM), erasable programmable read-only memory (EPROM or flash memory), optical fibers, handy compact disk read-only memory (CD-ROM), optical storage devices, magnetic storage devices, or any suitable combination of the foregoing.

According to one or more embodiments of the present disclosure, there is provided an information processing method, comprising:
in response to the first operation event, creating a group field in a target table of the first document;
in response to a second operation event, associating at least one target group of target cells corresponding to the group field;
in response to a third operation event based on the target cell, opening or joining the target group;
wherein the group field is a field with a field type of group.

According to one or more embodiments of the present disclosure, there is provided an information processing method, after associating a target cell corresponding to the group field with at least one target group, further comprising:
displaying identification information corresponding to each of the associated target groups in the target cell.

According to one or more embodiments of the present disclosure, there is provided an information processing method, and identification information corresponding to a target group includes a group profile picture, a group name, and/or a group thumbnail.

According to one or more embodiments of the present disclosure, there is provided an information processing method, in response to a third operation event based on the target cell, opening or joining the target group, comprising:
in response to the third operation event performed based on the identification information in the target cell, opening or joining a target group corresponding to the identification information on which the third operation event is based.

According to one or more embodiments of the present disclosure, there is provided an information processing method satisfying at least one of:
if the information of the target group is updated or the target group is dissolved, updating the identification information corresponding to the target group in the target cell in real time or regularly;
if the information of the target group is updated or the target group is dissolved, updating identification information corresponding to the target group in the target cell when the target group is associated with the target cell again, or when the target group is associated with another cell;
if the fourth operation event is performed on the identification information, a group profile of the target group corresponding to the identification information is displayed, and the group profile includes at least one of the following: a group name, a group profile picture, a group tag, and a control for opening or joining the target group.

According to one or more embodiments of the present disclosure, there is provided an information processing method, in response to a third operation event based on the target cell, opening or joining the target group, comprising:
in response to a third operation event based on the target cell, opening or joining the target group based on an attribution relationship of a current user performing the third operation event to the target group.

According to one or more embodiments of the present disclosure, there is provided an information processing method, based on an attribution relationship between a current user performing the third operation event and the target group, opening or joining the target group, comprising:
if the current user has joined the target group, opening the target group; or,
if the current user has not yet joined the target group, joining the target group.

According to one or more embodiments of the present disclosure, there is provided an information processing method, if the current user has joined the target group and the target group has been dissolved, after executing a third operation event, not joining and not opening the target group, and displaying first prompt information, and the first prompt information being used to prompt that the current user is not in the target group; or
if the current user has not yet joined the target group, and the current user does not have the permission to join the target group, after executing the third operation event, not joining and not opening the target group, and displaying second prompt information, wherein the second prompt information is used to prompt failure or error when joining the target group; or
if the current user has not yet joined the target group, and the target group has been dissolved, invalidated, or the permission required for joining the target group has changed, after executing the third operation event, not joining and not opening the target group, and displaying third prompt information, and the third prompt information being used to prompt the current user that the target group cannot join the target group.

According to one or more embodiments of the present disclosure, there is provided an information processing method, in response to a second operation event, associating a target cell corresponding to the group field with at least one target group, comprising:
in response to a first operation on the target cell, displaying a selectable group;
in response to a second operation on a selectable group, selecting at least one group from the selectable group;
establishing an association relationship between the target cell and the selected group;
wherein the selected group that has established an association relationship with the target cell is the target group.

According to one or more embodiments of the present disclosure, there is provided an information processing method satisfying at least one of:
the selectable group being a group for which a current user executing the second operation event has a preset permission;
displaying a search control for searching a group while the selectable group is displayed;
after selecting at least one group from the selectable groups, displaying identification information corresponding to the target group in the target cell, and when a third operation is performed on the identification information, deleting the identification information and canceling the selection of the group corresponding to the deleted identification information.

According to one or more embodiments of the present disclosure, there is provided an information processing method in which a target cell can be referenced by referencing the target cell to point to a target group to which the target cell is associated.

According to one or more embodiments of the present disclosure, there is provided an information processing method, responsive to a first operation event, creating a group field in a target table of a first document, comprising:
displaying a field creation interface in response to a fourth operation on the first control;
in response to a second operation in the field creation interface, determining that the field type of the created field is a group and creating the group field.

According to one or more embodiments of the present disclosure, there is provided an information processing method, responsive to a first operation event, creating a group field in a target table of a first document, comprising:
configuring an attribute of a column of cells in a target table in the first document as a group field in response to a first operation event, or
in response to a first operation event, adding a column of cells having attributes configured as group fields to a target table in the first document.

According to one or more embodiments of the present disclosure, there is provided an information processing method, wherein the target group is a group in a communication client associated with an account of a current user; or,

The target group is a mail group in a mail client associated with an account of the current user.

According to one or more embodiments of the present disclosure, there is provided an information processing method, comprising:
in response to a target event in a target table of the first document, creating a target group in an instant messaging client or a mail client;
obtaining group data of the target group, associating a target cell of the target table with the target group according to the group data;
in response to a first operation event based on the target cell, opening or joining the target group;
wherein the field type of the target cell is a group field.

According to one or more embodiments of the present disclosure, there is provided an information processing method, wherein the target event includes at least one of: new content being added to the target table, table content of the target table being changed, content of at least one cell in the target table conforms to a preset value, and a preset time node being satisfied.

According to one or more embodiments of the present disclosure, there is provided an information processing method, and the group data group includes at least one of the following items: a group name, a group profile picture, a group member, and a group description.

According to one or more embodiments of the present disclosure, there is provided an information processing method, wherein the target cell is a cell of any group of fields in the target table; or, the target cell is a cell of a group field in a record row corresponding to the target event;
the group field is a field with a field type of group.

According to one or more embodiments of the present disclosure, there is provided an information processing method, after a target cell of the target table is associated with the target group, the information processing method further comprises: displaying identification information corresponding to the associated target group in the target cell.

According to one or more embodiments of the present disclosure, there is provided an information processing method satisfying at least one of:
if the information of the target group is updated or the target group is dissolved, updating the identification information corresponding to the target group in the target cell in real time or periodically;
if the information of the target group is updated or the target group is dissolved, updating identification information corresponding to the target group in the target cell when the target group is associated with the target cell again, or when the target group is associated with another cell;
if the second operation event is performed on the identification information, displaying a group profile of the target group corresponding to the identification information, and the group profile including at least one of a group name, a group profile picture, a group tag, and a control for opening or joining the target group.

According to one or more embodiments of the present disclosure, there is provided an information processing method, in response to a first operation event based on the target cell, opening or joining the target group, comprising:
in response to a first operation event based on the target cell, opening or joining the target group based on an attribution relationship of a current user performing the first operation event to the target group.

According to one or more embodiments of the present disclosure, there is provided an information processing method in which a target cell can be referenced by referencing the target cell to point to a target group to which the target cell is associated.

According to one or more embodiments of the present disclosure, there is provided an information processing method, the target group is a group in an instant messaging client, the instant messaging client being associated with an account of a current user; or,
the target group is a mail group in a mail client associated with an account of the current user.

According to one or more embodiments of the present disclosure, there is provided an information processing apparatus, including:
a creating unit configured to create a group field in a target table of the first document in response to the first operation event;
a control unit configured to associate a target cell corresponding to the group field with at least one target group in response to a second operation event;
the control unit being further configured to open or join the target group in response to a third operation event based on the target cell;
wherein the group field is a field with a field type of group.

According to one or more embodiments of the present disclosure, there is provided an information processing apparatus, comprising:
a creation unit configured to create a target group in an instant messaging client or a mail client in response to a target event in a target table of the first document;
a control unit configured to obtain group data of the target group, and associate a target cell of the target table with the target group according to the group data;
the control unit being further configured to open or join the target group in response to a first operation event based on the target cell;
wherein the field type of the target cell is a group field.

According to one or more embodiments of the present disclosure, there is provided a terminal comprising: at least one memory and at least one processor;
wherein the at least one memory is configured to store program code, and the at least one processor is configured to invoke the program code stored in the at least one memory to perform the method of any one of the above.

According to one or more embodiments of the present disclosure, there is provided a computer-readable storage medium for storing program code that, when executed by a computer, causes the computer to perform the method of any of the above.

The above description is merely an explanation of preferred embodiments of the present disclosure and the technical principles employed. Those skilled in the art should understand that the scope of disclosure in the present disclosure is not limited to a technical solution formed by a specific combination of the above-described technical features, and should also cover other technical solutions formed by any combination of the above-described technical features or equivalent features thereof without departing from the concept of the above-described disclosure. For example, the above-described features are replaced with the technical features having similar functions disclosed in the present disclosure (but not limited to).

Furthermore, while operations are depicted in a particular order, this should not be understood as requiring the operations to be performed in the particular order shown or in a sequential order. Under certain circumstances, multitasking and parallel processing may be advantageous. Likewise, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments individually or in any suitable subcombination.

Although the subject matter has been described in language specific to structural features and/or methodological logical acts, it should be understood that the subject matter defined in the appended claims is not necessarily limited to the specific features or acts described above. Rather, the specific features and acts described above are merely exemplary forms for implementing the claims.

## Claims

1. An information processing method, comprising:
in response to a first operation event, creating a group field in a target table of a first document;
in response to a second operation event, associating a target cell corresponding to the group field with at least one target group; and
in response to a third operation event based on the target cell, opening or joining the target group,
wherein the group field is a field with a field type of group.

2. The method of claim 1, wherein after associating the target cell corresponding to the group field with the at least one target group, the method further comprises:
displaying identification information corresponding to each of the associated target groups in the target cell.

3. The method of claim 1, wherein,
the identification information corresponding to the target group includes a group profile picture, a group name, and/or a group thumbnail.

4. The method of claim 2, wherein in response to the third operation event based on the target cell, opening or joining the target group comprises:
in response to the third operation event performed based on the identification information in the target cell, opening or joining the target group corresponding to the identification information on which the third operation event is based.

5. The method of claim 2, wherein the method further comprises at least one of:
in response to information of the target group being updated or the target group being dissolved, updating the identification information corresponding to the target group in the target cell in real time or regularly;
in response to the information of the target group being updated or the target group being dissolved, updating the identification information corresponding to the target group in the target cell in a case that the target group is associated with the target cell again, or in a case that the target group is associated with another cell;
in response to the fourth operation event being performed on the identification information, displaying a group card of the target group corresponding to the identification information, wherein the group profile includes at least one of: a group name, a group profile picture, a group tag, or a control for opening or joining the target group.

6. The method of claim 2, wherein in response to the third operation event based on the target cell, opening or joining the target group comprises:
in response to the third operation event based on the target cell, opening or joining the target group based on an attribution relationship between a current user performing the third operation event and the target group.

7. The method of claim 6, wherein opening or joining the target group based on the attribution relationship between the current user performing the third operation event and the target group comprises:
in response to the current user having joined the target group, opening the target group; or,
in response to the current user having not yet joined the target group, joining the target group.

8. The method of claim 7, wherein,
in response to the current user having joined the target group and the target group having been dissolved, after performing the third operation event, displaying first prompt information without joining or opening the target group, wherein the first prompt information is used to prompt that the current user is not in the target group;
or,
in response to the current user having not yet joined the target group, and the current user not having a permission to join the target group, displaying, after performing the third operation event, second prompt information without joining or opening the target group, wherein the second prompt information is used to prompt failure or error upon joining the target group;
or,
in response to the current user having not yet joined the target group, and the target group having been dissolved, invalidated, or the permission required for joining the target group having changed, displaying, after executing the third operation event, third prompt information without joining or opening, wherein the third prompt information is used to prompt the current user that the target group cannot be joined.

9. The method of claim 1, wherein associating the target cell corresponding to the group field with the at least one target group in response to the second operation event comprises:
in response to a first operation on the target cell, displaying a selectable group;
in response to a second operation on the selectable group, selecting at least one group from the selectable group;
establishing an association relationship between the target cell and the selected group;
wherein the selected group that has established the association relationship with the target cell is the target group.

10. The method of claim 9, wherein at least one of:
the selectable group being a group for which a current user performing the second operation event has a preset permission;
displaying a search control for searching a group while the selectable group is displayed;
after selecting at least one group from the selectable group, displaying identification information corresponding to the target group in the target cell, and in response to a third operation being performed on the identification information, deleting the identification information and canceling the selection of the group corresponding to the deleted identification information.

11. The method of claim 1, wherein
the target cell is capable of being reference, and the target cell points to the target group associated with the target cell by being referenced.

12. The method of claim 1, wherein in response to the first operation event, creating the group field in the target table of the first document comprises:
in response to a fourth operation on the first control, displaying a field creation interface;
in response to a second operation in the field creation interface, determining that a field type of a created field is a group, and creating the group field.

13. The method of claim 1, wherein in response to the first operation event, creating the group field in the target table of the first document comprises:
in response to the first operation event, configuring an attribute of a column of cells in the target table in the first document as the group field, or,
in response to the first operation event, adding a column of cells with an attribute configured as the group field to a target table in the first document.

14. The method of claim 1, wherein
the target group is a group in a communication client associated with an account of a current user; or,
the target group is a mail group in a mail client associated with the account of the current user.

15. An information processing method comprising:
in response to a target event in a target table of a first document, creating a target group in an instant messaging client or a mail client;
obtaining group data of the target group, associating a target cell of the target table with the target group according to the group data; and
in response to a first operation event based on the target cell, opening or joining the target group,
wherein a field type of the target cell is a group field.

16. The method of claim 15, wherein
the target event includes at least one of: adding new content to the target table, changing table content of the target table, content of at least one cell in the target table conforming to a preset value, or satisfying a preset time node.

17. The method of claim 15, wherein
the group data includes at least one of a group name, a group profile picture, a group member, or a group description.

18. The method of claim 15, wherein
the target cell is a cell of any group fields in the target table; or, the target cell is a cell of a group field in a log row corresponding to the target event;
the group field is a field whose field type is group.

19. The method of claim 15, further comprising, after associating the target cell of the target table with the target group, displaying identification information corresponding to the associated target group in the target cell.

20. The method of claim 19, wherein at least one of:
in response to the information of the target group being updated or the target group being dissolved, updating the identification information corresponding to the target group in the target cell in real time or regularly;
in response to the information of the target group being updated or the target group being dissolved, updating identification information corresponding to the target group in the target cell in a case that the target group is associated with the target cell again, or in a case that the target group is associated with another cell;
in response to the second operation event being performed on the identification information, displaying a group profile of the target group corresponding to the identification information, the group profile including at least one of: a group name, a group profile picture, a group tag, or a control for opening or joining the target group.

21. The method of claim 19, wherein in response to the first operation event based on the target cell, opening or joining the target group comprises:
in response to the first operation event based on the target cell, opening or joining the target group based on an attribution relationship of a current user performing the first operation event to the target group.

22. The method of claim 15, wherein
the target cell is capable of being referenced, and the target cell points to the target group associated with the target cell by being referenced.

23. The method of claim 15, wherein
the target group is a group in an instant messaging client, the instant messaging client being associated with an account of a current user; or,
the target group is a mail group in a mail client associated with the account of the current user.

24. An information processing device, comprising:
a creating unit, configured to create a group field in a target table of a first document in response to a first operation event;
a control unit, configured to associate a target cell corresponding to the group field with at least one target group in response to a second operation event;
the control unit being further configured to open or join the target group in response to a third operation event based on the target cell,
wherein the group field is a field with a field type of group.

25. An information processing device, comprising:
a creation unit, configured to create a target group in an instant messaging client or a mail client in response to a target event in a target table of a first document;
a control unit, configured to obtain group data of the target group, and associate a target cell of the target table with the target group according to the group data; and
the control unit being further configured to open or join the target group in response to a first operation event based on the target cell,
wherein a field type of the target cell is a group field.

26. A terminal, comprising:
at least one memory and at least one processor;
wherein the at least one memory is configured to store program code and the at least one processor is configured to call the program code stored in the at least one memory to perform the method of any of claims 1 to 23.

27. A computer-readable storage medium for storing program code that, when executed by a computer, causes the computer to perform the method of any of claims 1 to 23.
